# EUROPEAN PATENT SPECIFICATION

(11) **EP 3 120 054 B1**
(45) Date of publication and mention of the grant of the patent: **29.07.2020**
(21) Application number: 15717271.9
(22) Date of filing: 12.03.2015
(51) Int. Cl.: F16K 3/12, F16K 3/316

(54) **CLOSING ELEMENT OF A GATE VALVE**
SCHLIESSELEMENT EINES SCHIEBERVENTILS
ÉLÉMENT DE FERMETURE D'UN ROBINET-VANNE

(30) Priority: 12.03.2014 PL 40751214
(43) Date of publication of application: 25.01.2017
(73) Proprietor: Szuster, Miroslaw, PL 98-350 Biala (PL)
(72) Inventor: Szuster, Miroslaw, PL 98-350 Biala (PL)
(74) Representative: Witek, Rafal
(86) International application number: PCT/PL2015/050004
(87) International publication number: WO 2015/137837

(56) References cited:
- EP-A2- 1 367 303
- GB-A- 891 773
- JP-U- S5 930 969
- US-A- 2 562 157
- US-A- 5 279 320

## Description

The subject of the present invention is a gate valve comprising a closing element, whose purpose is to cut off and adjust the fluid flow along a pipe segment connected hereto, especially with soft sealing surfaces, or ones that cooperate with flexible surfaces of the gate valve body.

Commonly known closing elements are covered with soft sealing surfaces or they collaborate with the flexible surfaces of the gate valve body. These are those elements of gate valves that are the most responsible for operation, the said valves being used in order to cut off and/or adjust the flow of water or gas in pipes. Considering fairly low purchasing costs, they are also used with sewage and contaminated fluids instead of knife gate valves, which are usually more expensive.

Well-known gate valves of this type possess a body, which comprises a pipe segment and a side pocket of the closing element. The body is formed in such a way that it collaborates with the drive unit of the gate valve, which contains a spindle which is installed so that it rotates, with a cap connected with the closing element being installed on the said spindle. The spindle is rotated in the cap in order to move the closing element in the guide rails of the body, which collaborate with the guiding projections of the closing element from the open position to the closed position and vice versa. The closing element is generally wedge shaped and it possesses a face seal. The upper face seals of the closing element are situated closer to the cap, whereas they are situated in such a manner so that they could collaborate to provide sealing adequately with the inclined surfaces of the pipe segment that are directed inwards, and oriented in the direction from the inlet side and from the outlet side. The closing elements furthermore possess a lower face seal, which is situated on the opposite side of the cap. The lower face seal is constructed in such a manner so that it could collaborate to provide sealing with the inclined surfaces that are directed inwards as well as with the clamping surface of the pipe segment that is oriented inwards: radially or partly radially. When the valve is in the fully open position, the closing element is found in the side pocket of the valve body. In order to close the valve, the spindle needs to be rotated in such a manner so that slide movement of the valve can be obtained in the direction towards the pipe segment. During this operation, the end of the closing element being situated opposite to the cap, and which is being pulled out into the fluid flux, is exposed to the risk of being deflected in the direction of the outflow, while the pressure exerted on the closing element, from the inflow side, clamps the face seal, on the outlet side, to the tilted surface of the pipe segment. The strongest pressures are exerted at the connection point, from the outlet side, of the upper face seal with the lower face seal. When the valve is closed or partly closed, the pressure on one side of the closing element is greater than on the other side. This pressure difference produces a force that clamps the closing element to the clamping surfaces in the gate valve body.

While the gate valve is being started, this force produces frictional resistance, which opposes the movement of the closing element. The force that is required to drive the closing element is proportional to frictional resistance.

In the majority of the cheaper solutions of the gate valve, the closing element is not specially guided in the gate valve body, and its only connection with the body is a spindle with a cap installed in the closing element. Any forces and vibrations from flow pressure are transferred to this spindle, which requires a solid sealing of the spindle in the gate valve body, and high torques are to be applied to the spindle for an effective closing of the valve. For this reason, such valves should serve the purpose solely of closing or opening of the flow section, and they should not be operated as partly open. In more streamlined gate valves, the closing element is more independently guided by guide rails, which are made on both sides of the valve body, and which collaborate with those projections that guide closing elements, and the cap is loosely installed in the wedge. In order to increase the sliding properties of projections, closing elements usually possess plastic high glide covers or inserts, which collaborate in an adequate manner with the body guides in the form of lead grooves or guiding ribs. In this manner, the required torque moment of the spindle is reduced and the wear of the seal during its work is partly reduced. Such glide covers or inserts can also be made of wear resistance material. For example JPS5930965U discloses a rubber-coated valve plate of the gate valve with a sliding guide covered with wear resistant plastic, such as ultra-high-molecular-weight polyethylene.

Solutions are also known of making the upper end of the closing element stiff by making a longer guide of the screw propeller in a long cap, which is rigidly installed in the closing element, yet this involves additional costs related to making special sealing of the spindle of the screw propeller and to very accurate assembly.

Even regardless of untypical designs of gate valves, as disclosed in the Polish patent specifications, i.e. PL 204608 B1 and PL202950 B1, both these solutions and the latest practical solutions possess exclusively closing elements with side projections that contain glide covers and that have the so-called "swimming" cap, which is not firmly connected with the closing element, which extends the durability of the valve and minimizes the torque of the spindle.

Such solutions, however, exhibit certain imperfections, as when closing the gate valve, there may occur some lateral tilting of the closing element in relation to the vertical axis of the spindle: both in the plane that is perpendicular to the flow direction of the medium through the valve, which results in an inaccurate (uneven) settlement of the closing element on the cylindrical face segment of the valve, and in the longitudinal plane that goes through the medium flow axis and the spindle axis, the result being an uneven distribution of the clamp of the upper seal of the closing elements on the tilted surfaces of the body valve, which consequently leads to an accelerated wear and tear of the valve and a (periodically) increased torque of the spindle.

Based on the patent specifications of the following invention: PL 182862 B1, a gate valve is known for controlling the fluid flow along a pipe segment that is connected with it, and whose closing element possesses an upper face seal, and which was proportionally increased in relation to the lower face seal, and these were smoothly connected with it, which facilitated closing and opening of the liquid flow through the pipe segment.

In this solution, however, no other elements were disclosed that guide the valve from the opening position to the closing position, which would permit further reduction of the tilting moment of the valve at the moment it is being moved from the opening position to the closing position and vice versa.

GB891773, PL188726 and EP1367303 disclose gate valves with closing elements equipped with guide members in a form of side projections that collaborate with corresponding guide rails or grooves situated on the body of the valve, which are arranged laterally with respect to the direction of the flow. In GB891773 the guide members extend along the sides of the closing element, whereas in PL188726 the guide members are arranged at mid height of the closing element. In EP1367303 the guide members comprise portions that are formed integrally with the valve core metal and are adapted to fit on the guide protrusion in the case member of the gate valve apparatus. The guide portion as described therein enable a movement of the valve core metal without undue rotation.

The gate valve closing element that is known from the PL 204751 B1 patent documentation permits, owing to its design, a reduction of the moment of its tilting while it is being moved from the opening position to the closing position and vice versa. In this solution, efforts were made to solve the problem that occurs when the closing element is being moved, with a simultaneous flow of fluid through the shut-off valve. Then, the pressure field and velocities produced by this flow result in the occurrence of the moment of the force that tilts the wedge, owing to which it can be displaced outside of the plane that is perpendicular to the fluid flow direction. As a result of this action of the force moment, the sealing edge of the closing element is displaced in relation to the sealing surfaces of the body, which has a detrimental effect on the tightness of the valve in the closing position and accelerates the wear of the sealing surfaces of the wedge.

The solution under the PL 204751 B1 patent documentation offers a partial solution to this problem owing to the fact that the end of the closing element is guided from the opening position to the closing position through two guiding projections that are symmetrical one to another and possess high gliding properties, and whose lower ends are situated as close as possible to the end of the closing element, which in turn results in a smaller moment of the force that produces the wedge tilt.

Problems related to sealing in the lower sealing area were quite successfully dealt with, yet a design of this type possess greater problems in upper sealing areas as the possible angular deflection of the closing element in these areas, especially on the top of the upper sealing areas, was not decreased, and with great pressure differences between the outlet and the inlet, the demand substantially increases for the moment of the closing force on the spindle.

A gate valve design of this type additionally poses greater problems when this valve is used with contaminated fluids, and particularly with raw sewage, and also with those fluids that contain certain amounts of solid particles, because the angle of the lower sealing surface of the body and the angle of the lower sealing surface of the wedge with the plane that is perpendicular to the movement direction of the wedge is in the range from 10° to 30° and less.

A tilt angle that is smaller than 30° mentioned above, and especially 25° and lower, results in worse effects of the self-cleaning of the gate valve from solid particles, which may lead to operational problems when it is used for raw sewage or similar media with specific contents of solid particles in the fluid that flows through it. This is in particular true of a situation when the velocities of the flowing medium are not high and there are large time intervals between the flows of this medium, and the medium sedimentation time is short.

Closing element guiding projections may possess, instead of plastic high glide inserts, an elastomer with hardness being greater than that of the sealing elastomer which was described in the US 5,279,320 patent documentation. In this case, in some solutions, slightly tight fitting is used of the closing element guiding projection with the valve body guide rail, which ensures better guiding of the closing element in the longitudinal plane that passes through the medium flow axis and the spindle axis, yet in the plane that is perpendicular to the flow direction of the medium through the valve, this may cause, as a result of some seizure of one of the closing element guiding projections on the valve body guide rail, a strong deflection of the closing element in the plane that is perpendicular to the flow direction of the medium through the valve, and so very high torque is required to close the valve effectively, in particular on the cylindrical flow section of the valve body. As a result of these seizures and deflections of the closing elements, the sealing elastomer might break off, especially when there occur strong forces produced as a result of a pressure difference on the outlet and inlet to the gate valve.

Efforts are made aimed at a reduction of the required drive force for effective closing of the gate valve, especially with a mechanical drive, but not only then. Engine drives for valves are generally sold in series of types that comprise constant quantities. If a smaller driving force is required, a cheaper drive unit with a smaller power can be used, all the more that engine drive units are usually several times as expensive as gate valves.

In view of the above, there occurred a need for a more versatile solution of the gate valve comprising a closing element, one which at the same time would be cheap in production and effective in operation; one which would be basically resistant to wear and tear, and one that would possess small demand for the torque of the spindle, and which would guarantee effective and repeatable tight closing of the medium flow through the gate valve, with low wear and tear of the sealing elements of closing elements.

A gate valve according to the invention comprises a closing element of the gate valve, the closing element being placed in a body that comprises a pipe segment and a side pocket and guide rails that are movable along a displacement axis being perpendicular to a central fluid flow axis of the gate valve, said displacement axis being contained in a displacement plane in the body of this valve, and said displacement plane being situated transversely to the central fluid flow axis, the closing element containing the following:
- a closure plate with a drive unit installed in it in the form of a cap and a drive spindle, a face seal comprised of lower and upper face seals, wherein the upper face seals are located closer to the cap and they are situated in such a manner, so that they could collaborate to provide sealing adequately with the inclined surfaces of the pipe segment that are directed inwards, and oriented in the direction from the inlet side and from the outlet side, and wherein the lower face seal is constructed in such a manner so that it could collaborate to provide sealing with the inclined surfaces that are directed inwards, as well as with the clamping surface of the pipe segment that is oriented inwards: radially or partly radially;
- at least two pairs of guiding projections on both sides of the closure plate configured to be contained in the displacement plane in the body of this valve, and to collaborate with the corresponding guide rails of the valve body,
wherein a pair of lower guiding projections is situated on a level that is closer to the lower face seal, and a pair of upper guiding projections is situated on a level that is closer to the cap of the drive unit, so that the upper edges of the pair of the upper guiding projections, which are closer to the cap of the drive unit, are situated on a level that is above the top of the upper face seal and the smallest distance from the lower edges of the pair of the lower guiding projections to the upper edges of the pair of upper guiding projections is greater than 70% of the dimension of the diameter of the cylindrical part of the pipe segment.

Preferably, the upper edges of the pair of upper guiding projections, which are situated closer to the cap of the drive unit, are located on the level of the top of the closure plate.

More preferably, the upper edges of the pair of the upper guiding projections, which are situated closer to the drive unit cap, are found on a level that is above the lower cap of the drive unit.

Most preferably, the upper edges of the pair of the upper guiding projections, which are situated closer to the drive unit cap, are found on the level of the top edge of the closure plate.

Preferably, the lower edges of the pair of the lower guiding projections are found at a certain distance from the cap of the drive unit, outside of the central fluid flow axis.

Preferably, the smallest distance of the lower edges of the pair of the lower guiding projections from the upper edges of the pair of upper guiding projections is greater than 85% of the dimension of the diameter of the cylindrical part of the pipe segment.

More preferably, the smallest distance of the lower edges of the pair of the lower guiding projections from the upper edges of the pair of upper guiding projections is equal to or greater than 100% of the dimension of the diameter of the cylindrical part of the pipe segment.

Preferably, the smallest distance between the lower guiding projections and the upper guiding projections is at least 20% of the dimension of the diameter of the cylindrical part of the pipe segment.

More preferably, the smallest distance between the lower guiding projections and the upper guiding projections is at least 50% of the dimension of the diameter of the cylindrical part of the pipe segment.

Preferably, the lower guiding projections and the upper guiding projections are made in the form of guiding ribs, which are able to collaborate with the inlet guides of the side pocket of the body as regards fitting: from sliding to slightly tight one.

Preferably, the guiding ribs are covered with rubber, which is connected together with the remaining external surface of the closure plate of the closing element, thus forming a uniform rubber coating.

More preferably, the guiding ribs are covered with cured elastic rubber, which is connected together with the remaining external surface of the closure plate of the closing element with a smaller hardness, thus forming a uniform rubber coating.

Also more preferably, the lower guiding projections, made in the form of guiding ribs, possess plastic high glide covers.

Also more preferably, the lower guiding projections and the upper guiding projections, made in the form of guiding ribs, possess plastic high glide covers.

Preferably, the lower guiding projections and the upper guiding projections are made in the form of lead grooves, which are able to cooperate with the outlet guides that possess the outlets of the side pocket of the body, as regards fitting: from sliding to slightly tight one.

Preferably, the lead grooves are covered with rubber, which is connected together with the remaining external surface of the closure plate of the closing element, thus forming a uniform rubber coating.

More preferably, the lead grooves are covered with cured elastic rubber, which is connected together with the remaining external surface of the closure plate of the closing element with a smaller hardness, forming a uniform rubber coating.

Also more preferably, the lower guiding projections, which are made in the form of lead grooves, possess plastic high glide inserts.

Also more preferably, the lower guiding projections and the upper guiding projections, which are made in the form of lead grooves, possess plastic high glide inserts.

Preferably, the upper face seal, near the connection with the lower face seal, possesses two side pilot thickenings.

Also preferably, the upper face seal, near the cap, in its symmetry axis, possesses an axis pilot thickening.

Owing to the use of the pairs of the guiding projections of the closure plate of the closing element, while at the same time the said pairs are at a certain distance from one another, an almost ideal guiding of the closing element was obtained from the open position to the closed position, without any greater deflections in the displacement plane. With this design of the closing element, there is a smaller demand for the torque of the spindle, which at the same time guarantees effective and repeatable tight closing of the medium flow through the gate valve, with low wear and tear of the sealing elements of the closing elements.

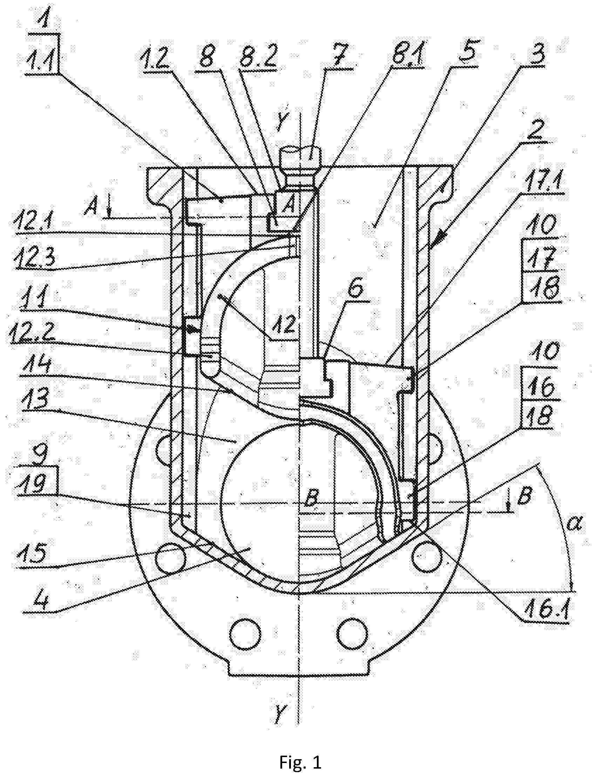

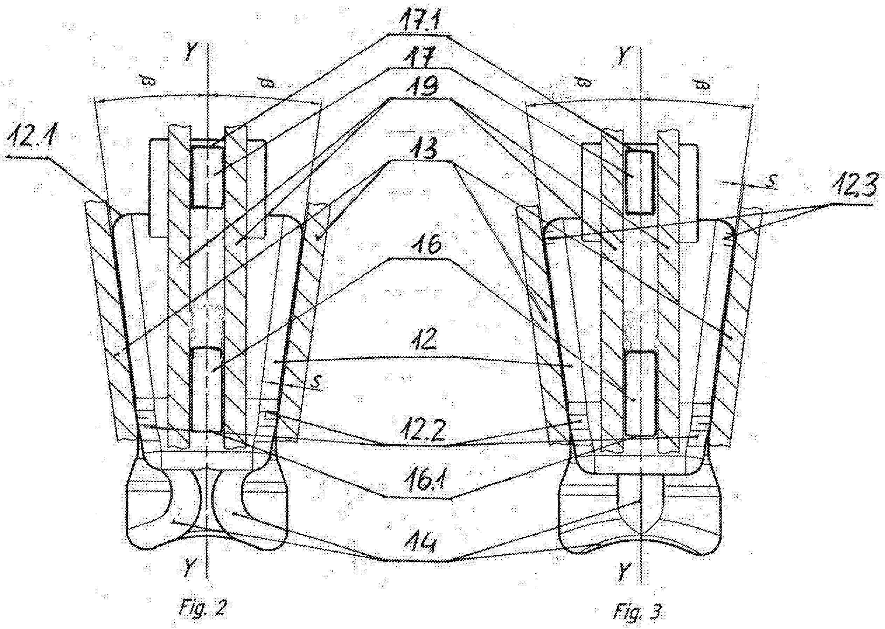

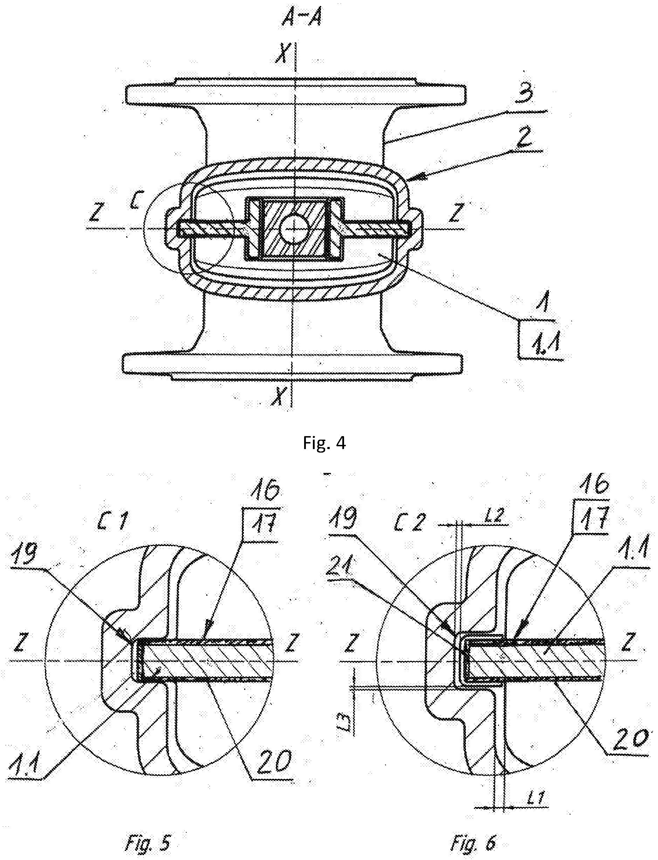

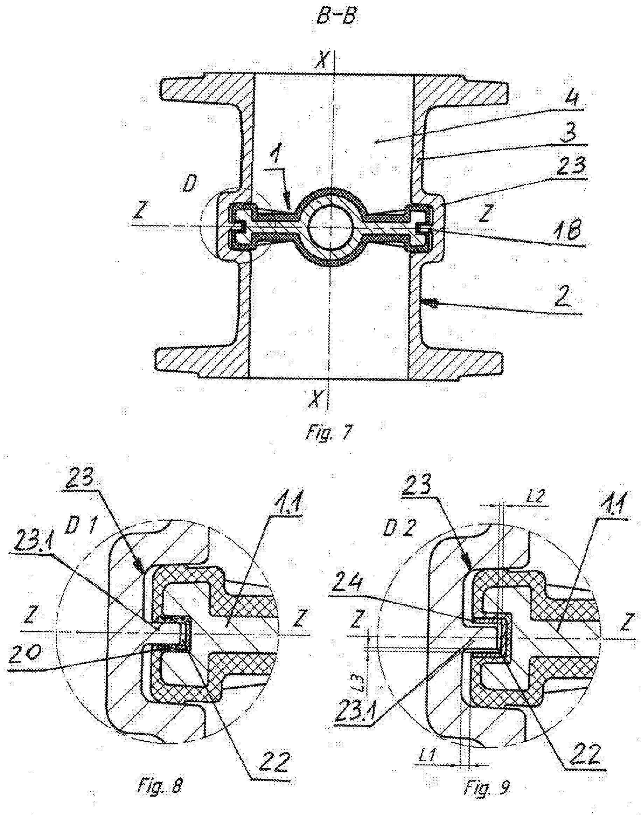

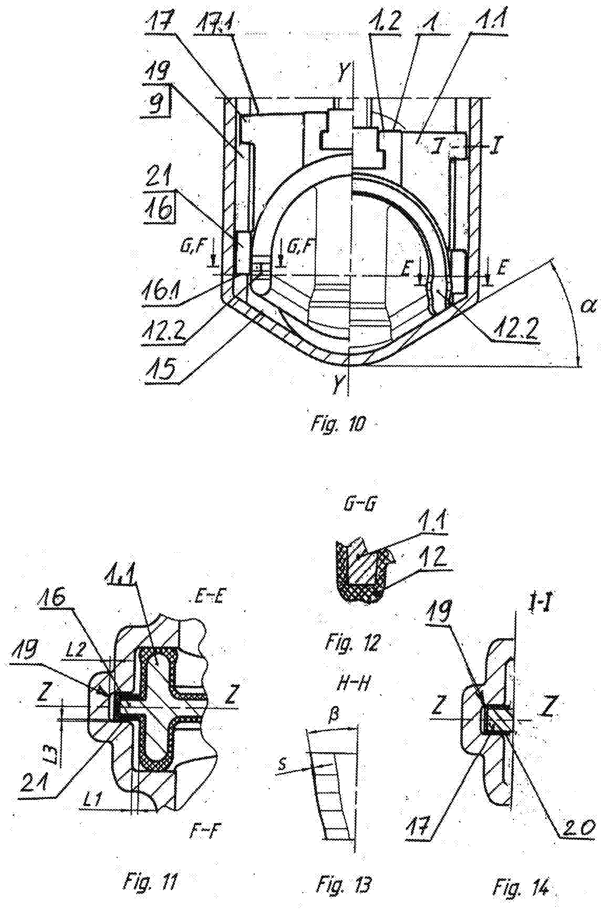

The subject of the invention is disclosed in the embodiments in the drawing, wherein Fig. 1 presents the gate valve body in the central cross-section from a side, with the closing element in half views; in the open position and in the closed position; Fig. 2 presents the closing element of the gate valve in a side view in the first embodiment variant; Fig. 3 presents the closing element of the gate valve in a side view in the second embodiment variant; Fig. 4 presents the gate valve in a top view and in a partial cross-section, including the closing element; along the A-A line marked in Fig. 1; Fig. 5 presents an enlarged fragment of the C1 embodiment variant marked in Fig. 4 as C, and Fig. 6 presents an enlarged fragment of the C2 embodiment variant marked in Fig. 4 as C; Fig. 7 presents the gate valve in a top view and in a partial cross-section, including the closing element, along the B-B line marked in Fig. 1; Fig. 8 presents an enlarged fragment of the D1 embodiment variant marked in Fig. 7 as D; and Fig. 9 presents an enlarged fragment of the D2 embodiment variant marked in Fig. 7 as D; Fig. 10 presents a stop wedge in the view as in Fig. 1 in a mixed embodiment variant: C1 and C2 and a fragment of the cross-section of the gate valve body in the central cross-section from a side; Fig. 11 presents an enlarged fragment of the closing element with the lower guiding projections in the C2 embodiment variant and that of the body in the cross-section from Fig. 10, in top projection, along the E-E line and along the F-F line; Fig. 12 presents a fragment of the top section of the face seal in the G-G cross-section, as shown in Fig. 10; Fig. 13 presents a fragment of the upper face seal in the cross-section from Fig. 10 along the H-H line, while Fig. 14 presents an enlarged fragment of the closing element with the lower guiding projections in the C1 embodiment variant and that of the body in the cross-section from Fig. 10 in top view along the I-I line.

Fig. 1-14 presents the closing element 1 of the gate valve 2 according to the invention, including the closure plate 1.1

The gate valve 2 possesses the body 3, which comprises the pipe segment 4 and the side pocket 5 of the closing element 1. The body 3 is formed in such a way that it collaborates with the drive unit 6 of the gate valve 2, which contains the spindle 7 which is installed so that it rotates, with the cap 8 connected with the closure plate 1.1 with the closing element 1. The spindle 7 of the gate valve 2 is rotated in the cap 8 in order to move the closure plate 1.1 of the closing element 1 in the guide rails 9 of the body 3, which collaborate with the guiding projections 10 of the closing element 1 from the open position to the closed position and vice versa. The closing element 1 is generally wedge shaped and possesses the face seal 11. The upper face seals 12 of the closing element 1 are situated closer to the cap 8, whereas they are situated in such a manner so that they could collaborate to provide sealing adequately with the tilted surfaces 13 of the pipe segment 4 that are directed inwards, and oriented in the direction from the inlet side and from the outlet side. The closing element 1 furthermore possesses the lower face seal 14, which is situated on the opposite side of the cap 8. The face seal 11 is constructed in such a manner so that it could collaborate to provide sealing with the tilted surfaces 13 that are directed inwards, as well as with the clamping surface 15 of the pipe segment 4 that is oriented inwards: radially or partly radially.

In most of valve designs, when the valve is in a fully open position, the closing element 1 is found in the side pocket 5 of the body 3 of the gate valve 2. In order to close the gate valve 2, the spindle 7 needs to be rotated in such a manner so that the slide movement of the closing element 1 can be obtained in the direction towards the pipe segment 4. During this operation, the end of the closing element 1 being situated opposite to the cap 8, and which is being pulled out into the fluid flux, is exposed to the risk of being deflected in the direction of the outflow, while the pressure exerted on the closing element 1, from the inflow side, clamps the upper face seal 12, on the outlet side, to the tilted surface 13 of the pipe segment 4. The strongest pressures are exerted especially at the connection point, from the outlet side, of the upper face seal 12 with the lower face seal 14. When the gate valve 2 is closed or partly closed, the pressure on one side of the closing element 1 is greater than on the other side. This pressure difference produces a force that clamps the closing element 1 to the surface of the upper face seal 12 in the body 3 of the gate valve 2. While the gate valve 2 is being started, this force produces frictional resistance, which opposes the movement of the closing element 1. The force that is required to drive the closing element 1 is proportional to frictional resistance.

In order to counteract this, in the solution of the gate valve 2 according to the invention, the guiding projections 10 were divided into two pairs: the lower guiding projections 16 and the upper guiding projections 17, which have common guide rails 9 that collaborate with them. The total height of the lower guiding projections 16 and of the upper guiding projections 17 is not substantially greater than the height of the single pair of such projections that are used in the solutions of classical gate valves, owing to which the closing element 1 according to the invention does not cause any increased frictional resistances; on the contrary; it substantially reduces them. This reduction of the frictional resistances of the closing element 1 is the result of a greater spacing between the pairs of the guiding projections 10 which are at a certain distance from each other, which reduces the tilts of the closing element 1 in the direction of the flow, i.e. in the direction of the central fluid flow axis X-X and simultaneous deflections of the closing element 1 from the displacement axis Y-Y, which is perpendicular to the central fluid flow axis X-X of the closing element 1. Furthermore, owing to this, the lateral tilts of the closing element 1 in its displacement plane Z-Z that contains the displacement axis Y-Y of the closing element 1, which is perpendicular to the central fluid flow axis X-X. This type lateral tilts of the closing elements 1 in its displacement plane Z-Z result in an asymmetrical settlement of the lower face seal 14 on the clamping surface 15 of the pipe segment 4. Consequently, a greater force is then required to close tightly the flow of the medium through the gate valve 2. Furthermore, this has an influence on the choice of a specific mechanical drive, whose permissible torque must be increased, which in turn results in greater investment and maintenance costs. In the preferred embodiment of the closing element 1, the upper edges 17.1 of the pair of the upper guiding projections 17, which are situated closer to the cap 8 of the drive unit 6, are found on a level above the top 12.1 of the upper face seal 12. It is much more preferably when the upper edges 17.1 of the pair of the upper guiding projections 17, which are situated closer to the cap 8 of the drive unit 6, are found on a level above the lower edge 8.1 of the cap 8 of the drive unit 6. Most preferably, however, the upper edges 17.1 of the upper guiding projections 17, which are situated closer to the cap 8 of the drive unit 6, are found on the level of the top edge 1.2 of the closure plate 1.1. In order to decrease the tilts of the closing element 1 to the greatest extent, while it is being open and, in particular, when it is being closed, the lower edges 16.1 of the pair of the lower guiding projections 16 are found at a certain distance from the cap 8 of the drive unit 6, outside of the central fluid flow axis X-X. In order to decrease the lateral tilts of the closing element 1 in the displacement plane Z-Z as well as to reduce tilts from this plane, the smaller distance of the lower edges 16.1 of the pair of the lower guiding projections 16 from the upper edges 17.1 of the pair of the upper guiding projections 17 needs to be greater than 70% of the dimension of the diameter of the cylindrical part of the pipe segment 4. Even more preferably, the smallest distance of the lower edges 16.1 of the pair of the lower guiding projections 16 from the upper edges 17.1 of the pair of the upper guiding projections 17 is greater than 85% of the dimension of the diameter of the cylindrical part of the pipe segment 4. Most preferably, however, when the smallest distance of the lower edges 16.1 of the pair of the lower guiding projections 16 from the upper edges 17.1 of the pair of the upper guiding projections 17 is equal to or greater than 100% of the dimension of the diameter of the cylindrical part of the pipe segment 4.

In order to reduce the frictional resistance of the guiding projections 10 in the guide rails 9, the smallest distance between the lower guiding projections 16 and the upper guiding projections 17 is at least 20% of the dimension of the diameter of the cylindrical part of the pipe segment 4. Most preferably, the smallest distance between the lower guiding projections 16 and the upper guiding projections 17 is at least 50% of the dimension of the diameter of the cylindrical part of the pipe segment 4.

In the embodiment variant as in Figs. 4-5, the lower guiding projections 16 and the upper guiding projections 17 of the closing element 1 are made in the form of guiding ribs 18, which are able to collaborate with the inlet guides 19 of the side pocket 5 of the body 3 as regards fitting: from sliding to slightly tight one. The guiding ribs 18 can be covered with rubber, which is connected together with the remaining external surface of the closure plate 1.1 of the closing element 1, thus forming a uniform rubber coating. More preferably, however, as disclosed in Fig. 1 and Fig. 14, the guiding ribs 18 are covered with cured elastic rubber 20, which is connected together with the remaining external surface of the closure plate 1.1 of the closing element 1 with a smaller hardness, thus forming a uniform rubber coating.

In the preferred embodiment, as shown in Figs. 10-14, it is only the lower guiding projections 16, in the form of guiding ribs 18, that possess plastic high glide covers 21. This embodiment of the closing element 1 reduces frictional resistances in the places of plastic high glide covers 21, where there occur high forces related to the flow of the medium through the pipe segment 4 while the medium flow is being closed with the closing element 1. In another preferred embodiment, as shown in Fig. 6, the lower guiding projections 16 and the upper guiding projections 17, in the form of guiding ribs 18, possess plastic high glide covers 21.

In the embodiment variant, as in Figs. 7-9, the lower guiding projections 16 and the upper guiding projections 17 are made in the form of lead grooves 22, which are able to collaborate with the outlet guides 23, which possess outlets 23.1 in the side pocket 5 of the body 3, as regards fitting: from sliding to slightly tight one. The lead grooves 22 are covered with rubber, which is connected together with the remaining external surface of the closure plate 1.1 of the closing element 1, thus forming a uniform rubber coating.

Preferably, as disclosed in Fig. 8 the lead grooves 22 are covered with cured elastic rubber 20, which is connected together with the remaining external surface of the closure plate 1.1 of the closing element 1 with a smaller hardness, thus forming a uniform rubber coating.

In a different preferred embodiment, it is only the lower guiding projections 16, in the form of lead grooves 22, that possess plastic high glide inserts 24.

In another preferred embodiment, as disclosed in Fig. 9, the lower guiding projections 16 and the upper guiding projections 17, in the form of lead grooves 22, possess plastic high glide inserts 24.

The upper face seal 12, as disclosed in Fig. 10, near the connection with the lower face seal 14, possesses two side pilot thickenings 12.2. These small thickenings, while the closing element 1 is moving upwards and downwards, protect the face seal 11 of the closing element 1 against premature wear and tear. In this case, preferably, the upper guiding projections 17 are covered with cured elastic rubber 20 and they collaborate with the guide rails 9 as regards slightly tight fitting, and the lower guiding projections 16 possess plastic high glide covers 21, and they collaborate with the guide rails 9 as regards sliding fitting, the result being very small tilts of the closing element 1 during its displacement from the open position to the closed position and vice versa, at the same time with relatively low frictional resistances.

The upper face seal 12, near the cap 8, in its symmetry axis, may additionally possess an axial pilot thickening 12.3. These three pilot thickenings, as disclosed in Fig. 1 and Fig. 3, protect even further the face seal 11 from premature wear and tear, in particular when the upper guiding projections 17 and the lower guiding projections 16 possess plastic high glide covers 21 and they collaborate with guide rails 9 as regards sliding fitting. The detail of the side pilot thickening 12.2 with S dimension is shown in Fig. 13.

In order to avoid jamming of the guiding projections 10 of the closing element 1 in the body 3 of the gate valve 2, lash L1 between the side surfaces of the face seal 11 and the body 3 needs to be greater than lash L2 between the side surfaces of the guiding projections 10 and the side surfaces of the guide rails 9. Also, in order to prevent the guiding projections 10 of the closing element 1 in the body 3 of the gate valve 2 from jamming, lash L2 between the side surfaces of the guiding projections 10 and the side surfaces of the guide rails 9 needs to be greater than lash L3 between the lead surfaces of the guiding projections 10 of the closing element 1 and the lead surfaces of the guide rails 9 of the body 3 of the gate valve 2.

In Fig. 10, on the left side, the closing element 1 is disclosed in the position of contact with two side pilot thickenings 12.2 with the tilted surfaces 13 of the pipe segment 4, and on the right side, the closing element 1 is presented in the closed position, where the face seal 11 adheres tightly to the tilted surfaces 13 of the clamping surfaces 15 of the pipe segment 4. This is also disclosed in a cross-section in Fig. 11.

As an example, one of the variants of the shape of the upper face seal 12 is presented in Fig. 12.

Preferably, as illustrated in Fig. 1 and Fig. 10, the deflection angle α of a segment of the clamping surface 15 of the pipe segment 4 with the plane that is perpendicular to the displacement plane X-X of the closing element 1 ranges from 30° to 40°. Also preferably, the wedge opening angle β is in the range from 8° to 24°, which is illustrated in Fig. 2 and Fig. 3.

## Claims

1. A gate valve (2) comprising a closing element, the closing element being placed in a body (3) of said gate valve, said body comprising a pipe segment (4) and a side pocket (5) as well as guide rails (9), said closing element being slidingly movable along a displacement axis (Y-Y) being perpendicular to a central fluid flow axis (X-X) of the gate valve, said displacement axis being contained in a displacement plane (Z-Z) in the body (3) of this valve, and said displacement plane being situated transversely to the central fluid flow axis (X-X), the closing element (1) containing the following:
- a closure plate (1.1) with a drive unit (6) installed in it in the form of a cap (8) and a drive spindle (7), a face seal (11) comprised of lower and upper face seals (14,12), wherein the upper face seals (12) are located closer to the cap (8) and they are situated in such a manner, so that they collaborate to provide sealing adequately with the inclined surfaces (13) of the pipe segment (4) that are directed inwards, and oriented in the direction from the inlet side and from the outlet side, and wherein the lower face seal (14) is constructed in such a manner so that it collaborates to provide sealing with the inclined surfaces (13) that are directed inwards as well as with a clamping surface (15) of the pipe segment (4) that is oriented inwards radially or partly radially;
- at least two pairs of guiding projections (10) on both sides of the closure plate (1.1) configured to be contained in the displacement plane in the body (3) of this valve, and to collaborate with the corresponding guide rails (9) of the valve body, wherein a pair of lower guiding projections (16) is situated on a level that is closer to the lower face seal (14), and a pair of upper guiding projections (17) is situated on a level that is closer to the cap (8) of the drive unit (6), so that upper edges (17.1) of the pair of the upper guiding projections (17), which are closer to the cap (8) of the drive unit (6), are situated on a level that is above the top (12.1) of the upper face seal (12),
**characterized in that**
the smallest distance from the lower edges (16.1) of the pair of the lower guiding projections (16) to the upper edges (17.1) of the pair of upper guiding projections (17) is greater than 70% of the dimension of the diameter of a cylindrical part of the pipe segment (4).

2. The gate valve according to claim 1, **characterized in that** the upper edges (17.1) of the pair of the upper guiding projections (17) that are situated closer to the cap (8) of the drive unit (6), are located on a level that is above the lower edge (8.1) of the cap (8) of the drive unit (6).

3. The gate valve according to claim 1, **characterized in that** the upper edges (17.1) of the pair of upper guiding projections (17), which are situated closer to the cap (8) of the drive unit (6), are located on the level of the top edge (1.2) of the closure plate (1.1).

4. The gate valve according to any one of claims 1 to 3, **characterized in that** the lower guiding projections (16) and the upper guiding projections (17) are made in the form of guiding ribs (18), which collaborate with inlet guides (19) of the side pocket (5) of the body (3) with a fitting ranging from sliding to slightly tight one.

5. The gate valve according to claim 4, **characterized in that** the guiding ribs (18) are covered with rubber, which is connected together with the remaining external surface of the closure plate (1.1) of the closing element (1), thus forming a uniform rubber coating.

6. The gate valve according to claim 5, **characterized in that** the guiding ribs (18) are covered with cured elastic rubber (20), which is connected together with the remaining external surface of the closure plate (1.1) of the closing element (1) having a smaller hardness, thereby forming a uniform rubber coating.

7. The gate valve according to any one of claims 4 to 6, **characterized in that** the lower guiding projections (16), in the form of guiding ribs (18), possess plastic high glide covers (21).

8. The gate valve according to any one of claims 4 to 6, **characterized in that** the lower guiding projections (16) and the upper guiding projections (17), made in the form of guiding ribs (18), possess plastic high glide covers (21).

9. The gate valve according to any one of claims 1 to 4, **characterized in that** the lower guiding projections (16) and the upper guiding projections (17) are made in the form of lead grooves (22), which cooperate with outlet guides (23), that possess outlets (23.1) of the side pocket (5) of the body (3), with a fitting ranging from sliding to slightly tight one.

10. The gate valve according to claim 9, **characterized in that** the lead grooves (22) are covered with rubber, which is connected together with the remaining external surface of the closure plate (1.1) of the closing element (1), thus forming a uniform rubber coating.

11. The gate valve according to claim 10, **characterized in that** the lead grooves (22) are covered with cured elastic rubber (20), which is connected together with the remaining external surface of the closure plate (1.1) of the closing element (1) having a smaller hardness, thereby forming a uniform rubber coating.

12. The gate valve according to any one of claims 9 to 11, **characterized in that** the lower guiding projections (16), which are made in the form of lead grooves (22), possess plastic high glide inserts (24).

13. The gate valve according to any one of claims 9 to 11, **characterized in that** the lower guiding projections (16) and the upper guiding projections (17), which are made in the form of lead grooves (22), possess plastic high glide inserts (24).

14. The gate valve according to any one of claims 1 to 13, **characterized in that** the upper face seal (12), near the connection with the lower face seal (14), possesses two side pilot thickenings (12.2).

15. The gate valve according to claim 14, **characterized in that** the upper face seal (12), near the cap (8), in its symmetry axis, possesses an axial pilot thickening (12.3).

## Patentansprüche

1. Ein Schieberventil (2) umfassend ein Schließelement, wobei sich das Schließelement in einem Körper (3) jenes Schieberventils befindet, wobei jener Körper ein Rohrsegment (4) und eine Seitentasche (5) sowie Führungsschienen (9) umfasst, wobei jenes Schließelement gleitend entlang einer Verschiebungsachse (Y-Y) bewegbar ist, welche senkrecht zu einer zentralen Flüssigkeitsflussachse (X-X) des Schieberventils ist, wobei jene Verschiebungsachse in einer Verschiebungsebene (Z-Z) im Körper (3) des Ventils enthalten ist, und jene Verschiebungsebene quer zu der zentralen Flüssigkeitsflussachse (X-X) angeordnet ist, wobei das Schließelement (1) Folgendes enthält:
eine Schließplatte (1.1) mit einer darin in der Form einer Kappe (8) installierten Antriebseinheit (6) und eine Antriebsspindel (7), eine Gleitringdichtung (11) bestehend aus unteren und oberen Gleitringdichtungen (14, 12), wobei sich die oberen Gleitringdichtungen (12) näher an der Kappe (8) befinden und in einer Weise angeordnet sind, dass sie zusammenwirken um hinreichende Dichtung mit den geneigten Oberflächen (13) des Rohrsegments (4) herzustellen, die nach innen gerichtet und in der Richtung von der Einlassseite und von der Auslassseite ausgerichtet sind, und wobei die untere Gleitringdichtung (14) in einer Weise konstruiert ist, dass sie zusammenwirkt, um Dichtung herzustellen mit den geneigten Oberflächen (13), die nach innen gerichtet sind, sowie mit einer Spannfläche (15) des Rohrsegments (4), die radial oder teilweise radial nach innen gerichtet ist;
- zumindest zwei Paare von Führungsvorsprüngen (10) auf beiden Seiten der Schließplatte (1.1), konfiguriert um in der Verschiebungsebene des Körpers (3) des Ventils enthalten zu sein, und mit den entsprechenden Führungsschienen (9) des Ventilkörpers zusammenzuwirken, wobei sich ein Paar von unteren Führungsvorsprüngen (16) auf einer Ebene befindet, die näher an der unteren Gleitringdichtung (14) ist, und Paar von oberen Führungsvorsprüngen (17) such auf einer Ebene befindet, die näher an der Kappe (8) derAntriebseinheit (6) ist, so dass obere Kanten (17.1) des Paares der oberen Führungsvorsprünge (17), welche näher an der Kappe (8) der Antriebseinheit (6) sind, sich auf einer Ebene befinden, die oberhalb der Oberkante (12.1) der oberen Gleitringdichtung (12) ist,
dadurch charakterisiert, dass
der kleinste Abstand von den unteren Kanten (16.1) des Paares der unteren Führungsvorsprünge (16) zu den oberen Kanten (17.1) des Paares der oberen Führungsvorsprünge (17) größer als 70% der Dimension des Durchmessers eines zylindrischen Teils des Rohrsegments (4) ist.

2. Das Schieberventil nach Anspruch 1, dadurch charakterisiert, dass die oberen Kanten (17.1) des Paares der oberen Führungsvorsprünge (17), die sich näher an der Kappe (8) der Antriebseinheit (6) befinden, sich auf einer Ebene über der unteren Kante (8.1) der Kappe (8) der Antriebseinheit (6) befinden.

3. Das Schieberventil nach Anspruch 1, dadurch charakterisiert, dass die oberen Kanten (17.1) des Paares der oberen Führungsvorsprünge (17), die sich näher an der Kappe (8) der Antriebseinheit (6) befinden, sich auf der Ebene der obersten Kante (1.2) der Schließplatte (1.1) befinden.

4. Das Schieberventil nach einem der Ansprüche 1 bis 3, dadurch charakterisiert, dass die unteren Führungsvorsprünge (16) und die oberen Führungsvorsprünge (17) in Form von Führungsrippen (18) ausgestaltet sind, die mit den Einlassführungen (19) der Seitentasche (5) des Körpers (3) mit einem Fitting, das sich von gleitend bis etwas gespannt erstreckt, zusammenwirken.

5. Das Schieberventil nach Anspruch 4, dadurch charakterisiert, dass die Führungsrippen (18) mit Gummi bedeckt sind, welcher mit der übrigen externen Oberfläche der Schließplatte (1.1) des Schließelements (1) verbunden ist, somit einen einheitlichen Gummiüberzug bildend.

6. Das Schieberventil nach Anspruch 5, dadurch charakterisiert, dass die Führungsrippen (18) mit gehärtetem elastischem Gummi (20) bedeckt sind, welcher mit der übrigen externen Oberfläche der Schließplatte (1.1) des Schließelements (1) verbunden ist, das eine geringere Härte hat, somit einen einheitlichen Gummiüberzug bildend.

7. Das Schieberventil nach einem der Ansprüche 4 bis 6, dadurch charakterisiert, dass die unteren Führungsvorsprünge (16), in der Form von Führungsrippen (18), Kunststoff-Hochgleitabdeckungen (21) besitzen.

8. Das Schieberventil nach einem der Ansprüche 4 bis 6, dadurch charakterisiert, dass die unteren Führungsvorsprünge (16) und die oberen Führungsvorsprünge (17), ausgestaltet in der Form von Führungsrippen (18), Kunststoff-Hochgleitabdeckungen (21) besitzen.

9. Das Schieberventil nach einem der Ansprüche 1 bis 4, dadurch charakterisiert, dass die unteren Führungsvorsprünge (16) und die oberen Führungsvorsprünge (17) in der Form von Führungsrillen (22) ausgestaltet sind, die mit Auslassführungen (23) zusammenwirken, die Auslässe (23.1) der Seitentasche (5) des Körpers (3) besitzen, mit einem Fitting, das sich von gleitend bis etwas gespannt erstreckt.

10. Das Schieberventil nach Anspruch 9, dadurch charakterisiert, dass die Führungsrillen (22) mit Gummi bedeckt sind, welcher mit der übrigen externen Oberfläche der Schließplatte (1.1) des Schließelements (1) verbunden ist, somit einen einheitlichen Gummiüberzug bildend.

11. Das Schieberventil nach Anspruch 10, dadurch charakterisiert, dass die Führungsrillen (22) mit gehärtetem elastischem Gummi (20) bedeckt sind, welcher mit der übrigen externen Oberfläche der Schließplatte (1.1) des Schließelements (1) verbunden ist, das eine geringere Härte hat, somit einen einheitlichen Gummiüberzug bildend.

12. Das Schieberventil nach einem der Ansprüche 9 bis 11, dadurch charakterisiert, dass die unteren Führungsvorsprünge (16), die in der Form von Führungsrillen (22) ausgestaltet sind, Kunststoff-Hochgleiteinsätze (24) besitzen.

13. Das Schieberventil nach einem der Ansprüche 9 bis 11, dadurch charakterisiert, dass die unteren Führungsvorsprünge (16) und die oberen Führungsvorsprünge (17), die in der Form von Führungsrillen (22) ausgestaltet sind, Kunststoff-Hochgleiteinsätze (24) besitzen.

14. Das Schieberventil nach einem der Ansprüche 1 bis 13, dadurch charakterisiert, dass die obere Gleitringdichtung (12), in der Nähe der Verbindung mit der unteren Gleitringdichtung (14), zwei Seitenpilotverdickungen (12.2) besitzt.

15. Das Schieberventil nach Anspruch 14, dadurch charakterisiert, dass die obere Gleitringdichtung (12), in der Nähe der Kappe (8), in ihrer Symmetrieachse eine axiale Pilotverdickung (12.3) besitzt.

## Revendications

1. Robinet-vanne (2) comprenant un élément de fermeture, l'élément de fermeture étant disposé dans un corps (3) du robinet-vanne, le corps comprenant un segment de tuyau (4) et une poche latérale (5) ainsi que des rails de guidage (9), l'élément de fermeture étant déplaçable en coulissement le long d'un axe de déplacement (Y-Y) perpendiculaire à un axe central (X-X) de flux de fluide du robinet-vanne, l'axe de déplacement étant compris dans un plan de déplacement (Z-Z) dans le corps (3) de ce robinet et le plan de déplacement étant situé transversalement à l'axe central (X-X) de flux de fluide, l'élément de fermeture (1) contenant ce qui suit :
- une plaque de fermeture (1.1) avec une unité d'entraînement (6) montée là-dedans sous la forme d'un chapeau (8) et d'une broche d'entraînement (7), un joint (11) composé de joints inférieurs et supérieurs (14, 12), les joints supérieurs (12) étant situés plus proche du chapeau (8) et étant situés de façon telle qu'ils coopèrent pour fournir une étanchéité de manière adéquate avec les surfaces inclinées (13) du segment de tube (4) qui sont orientées vers l'intérieur, et étant orientés dans la direction du côté entrée vers le côté sortie, et le joint inférieur (14) étant conçu de façon telle qu'il coopère pour fournir une étanchéité aussi bien avec les surfaces inclinées (13) qui sont orientées vers l'intérieur, qu'avec une surface de serrage (15) du segment de tube (4) qui est orientée radialement ou partiellement radialement vers l'intérieur,
- au moins deux paires de saillies de guidage (10) sur les deux côtés de la plaque de fermeture (1.1) configurées pour être situées dans le plan de déplacement dans le corps (3) du robinet et pour coopérer avec les rails de guidage (9) correspondants du corps de robinet, une paire de saillies de guidage inférieures (16) étant situées à un niveau qui est plus proche du joint inférieur (14) et une paire de saillies de guidage supérieures (17) étant situées à un niveau qui est plus proche du chapeau (8) de l'unité d'entraînement (6), si bien que des bords supérieurs (17.1) de la paire de saillies de guidage supérieures (17), qui sont plus proches du chapeau (8) de l'unité d'entraînement (6), sont situés à un niveau qui est au-dessus de la tête (12.1) du joint supérieur (12),
**caractérisé en ce que**
la distance la plus petite entre des bords inférieurs (16.1) de la paire de saillies de guidage inférieures (16) et les bords supérieurs (17.1) de la paire de saillies de guidage supérieures (17) est supérieure à 70 % des dimensions du diamètre d'une partie cylindrique du segment de tube (4).

2. Robinet-vanne selon la revendication 1, **caractérisé en ce que** les bords supérieurs (17.1) de la paire de saillies de guidage supérieures (17) qui sont situés plus proche du chapeau (8) de l'unité d'entraînement (6), sont situés à un niveau qui est au-dessus du bord inférieur (8.1) du chapeau (8) de l'unité d'entraînement (6).

3. Robinet-vanne selon la revendication 1, **caractérisé en ce que** les bords supérieurs de la paire de saillies de guidage supérieures (17) qui sont situés plus proche du chapeau (8) de l'unité d'entrainement (6), sont placés au niveau du bord supérieur (1.2) de la plaque de fermeture (1.1).

4. Robinet-vanne selon l'une quelconque des revendications 1 à 3, **caractérisé en ce que** les saillies de guidage inférieures (16) et les saillies de guidage supérieures (17) sont réalisées sous forme de nervures de guidage (18) qui coopèrent avec des guides d'entrée (19) de la poche latérale (5) du corps (3) avec un ajustement allant d'un ajustement coulissant à un ajustement légèrement serré.

5. Robinet-vanne selon la revendication 4, **caractérisé en ce que** les nervures de guidage (18) sont recouverts d'un caoutchouc qui est rattaché à la surface externe restante de la plaque de fermeture (1.1) de l'élément de fermeture (1), formant ainsi un revêtement de caoutchouc uniforme.

6. Robinet-vanne selon la revendication 5, **caractérisé en ce que** les nervures de guidage (18) sont recouvertes d'un caoutchouc élastique vulcanisé (20) qui est rattaché à la surface extérieure restante de la plaque de fermeture (1.1) de l'élément de fermeture (1) ayant une dureté moindre, formant de cette façon un revêtement de caoutchouc uniforme.

7. Robinet-vanne selon l'une quelconque des revendications 4 à 6, **caractérisé en ce que** les saillies de guidage inférieures (16), sous la forme de nervures de guidage (18), possèdent des revêtements (21) présentant une grande capacité de glissement.

8. Robinet-vanne selon l'une quelconque des revendications 4 à 6, **caractérisé en ce que** les saillies de guidage inférieures (16) et les saillies de guidage supérieures (17), réalisées sous la forme de nervures de guidage (18), possèdent des revêtements (21) présentant une grande capacité de glissement.

9. Robinet-vanne selon l'une quelconque des revendications 1 à 4, **caractérisé en ce que** les saillies de guidage inférieures (16) et les saillies de guidage supérieures (17) sont réalisées sous la forme de rainures de guidage (22), qui coopèrent avec des guides de sortie (23), qui comprennent des sorties (23.1) de la poche latérale (5) du corps (3), avec un ajustement allant d'un ajustement coulissant à un ajustement légèrement serré.

10. Robinet-vanne selon la revendication 9, **caractérisé en ce que** les rainures de guidage (22) sont recouvertes de caoutchouc qui est rattaché au restant de la surface extérieure de la plaque de fermeture (1.1) de l'élément de fermeture (1), formant de cette façon un revêtement de caoutchouc uniforme.

11. Robinet-vanne selon la revendication 10, **caractérisé en ce que** les rainures de guidage (22) sont recouvertes d'un caoutchouc élastique vulcanisé (20) qui est rattaché à la surface extérieure restante de la plaque de fermeture (1.1) de l'élément de fermeture (1), formant de cette façon un revêtement de caoutchouc uniforme.

12. Robinet-vanne selon l'une quelconque des revendications 9 à 11, **caractérisé en ce que** les saillies de guidage inférieures (16) qui sont réalisées sous la forme de rainures de guidage (22), comprennent des inserts (24) présentant une grande capacité de glissement.

13. Robinet-vanne selon l'une quelconque des revendications 9 à 11, **caractérisé en ce que** les saillies de guidage inférieures (16) et les saillies de guidage supérieures (17), qui sont réalisées sous la forme de rainures de guidage (22), comprennent des inserts (24) présentant une grande capacité de glissement.

14. Robinet-vanne selon l'une quelconque des revendications 1 à 13, **caractérisé en ce que**, proche de la connexion avec le joint inférieur (14), le joint supérieur (12) comprend deux épaississements de guidage latéraux (12.2).

15. Robinet-vanne selon la revendication 14, **caractérisé en ce que**, proche du chapeau (8), sur son axe de symétrie, le joint supérieur (12) comprend un épaississement de guidage axial (12.3).
